# EUROPEAN PATENT SPECIFICATION

(11) **EP 2 319 232 B1**
(45) Date of publication and mention of the grant of the patent: **03.07.2013**
(21) Application number: 09776389.0
(22) Date of filing: 19.02.2009
(51) Int. Cl.: H04M 1/60, H01Q 1/46, H04B 1/38

(54) **METHOD FOR DRIVING A GROUND REFERENCE ON A SIGNAL PATH, CONTROL CIRCUIT FOR DRIVING A GROUND REFERENCE ON A SIGNAL PATH, AND MOBILE DEVICE**
VERFAHREN ZUM ANSTEUERN EINER MASSEREFERENZ AUF EINEM SIGNALPFAD, STEUERSCHALTUNG ZUM ANSTEUERN EINER MASSEREFERENZ AUF EINEM SIGNALPFAD UND MOBILE EINRICHTUNG
PROCÉDÉ POUR COMMANDER UNE RÉFÉRENCE DE MASSE SUR UN CHEMIN DE SIGNAL, CIRCUIT DE COMMANDE POUR COMMANDER UNE RÉFÉRENCE DE MASSE SUR UN CHEMIN DE SIGNAL ET DISPOSITIF MOBILE

(30) Priority: 29.08.2008 US 231228
(43) Date of publication of application: 11.05.2011
(73) Proprietor: Sony Ericsson Mobile Communications AB, 221 88 Lund (SE)
(72) Inventor: KÖRNER, Hans, Peter, S-222 20 Lund (SE)
(74) Representative: Banzer, Hans-Jörg
(86) International application number: PCT/EP2009/001202
(87) International publication number: WO 2010/022801

(56) References cited:
- EP-A- 0 738 047
- EP-A- 1 536 663
- US-A1- 2007 032 130
- US-A1- 2007 197 267

## Description

### BACKGROUND OF THE INVENTION

The present invention relates to a method for driving a ground reference on a signal path, a control circuit for driving a ground reference on a signal path, and a mobile device.

EP 1 536 663 A1 relates to a headset interface circuit. The headset comprises one or more loudspeakers and a microphone. The interface circuit makes use of a phantom ground approach for supplying a reference ground potential to the loudspeakers and microphone in the headset. In the headset, the loudspeakers and the microphone are all connected to a common point which is provided with a voltage from a wire. The wire is connected to a phantom ground. The phantom ground potential is supplied to the wire from an operational amplifier which is connected in a voltage follower configuration. The noninverting input of the operational amplifier is connected to the signal ground potential, for example 1.4 volts. Thus, in this example, a 1.4 volt potential is supplied to the wire.

### BRIEF SUMMARY OF THE INVENTION

According to an embodiment of the present invention, a method for driving a ground reference on a signal path is provided. The signal path is used as a ground reference path for an audio signal and additionally as an input signal path for an antenna signal. According to the method, a signal of the signal path is sensed and then a differential signal corresponding to a difference between the sensed signal of the signal path and the ground signal is generated. The differential signal is supplied to the signal path, thus driving the ground reference of the audio signal.

Especially in the field of mobile devices, for example a mobile phone or a personal digital assistant (PDA), a connection between the mobile device and an external antenna or an external microphone or an external head set is provided by a so-called multiport connector. To reduce the number of ports of a multiport connector for achieving a small and cost-effective design of the multiport connector, a multiport connector may comprise for example four ports, two ports for outputting two audio signals to two loudspeakers of a stereo headset, one port for inputting an audio signal of a microphone and one port providing a signal return path, i.e. a signal ground, for the two output signals and the input signal and additionally providing a signal path for an antenna signal from an antenna provided in a wire to a microphone or the stereo head set. Due to the antenna signal, the latter port for the signal return path cannot be connected directly to ground as it would be desirable to provide a return path for the audio signals. However, by supplying the differential signal generated according to the above-described method of the present invention, the signal as a ground reference for the audio signals is provided on the signal path. Thus, a high quality audio signal can be provided, and, in case of the above-described configuration comprising a stereo headset, a microphone and an antenna, a crosstalk between the audio output signals to the loudspeakers of the stereo headset and a crosstalk between any of the output signals and the input signal of the microphone can be reduced or even completely cancelled without influencing the antenna signal.

The step of supplying the differential signal to the signal path comprises a low-pass filtering of the differential signal. The low-pass filtering may be accomplished by supplying the differential signal to the signal path via a series connection of a resistor and an inductivity. The low-pass filtering may further comprise a supplying of the differential signal to ground via a resistor and a capacity. Thus, the high frequency signals of the antenna signal comprised in the differential signal may be blocked by the inductivity and may be short cut to ground via the capacitor. Therefore, the differential signal supplied to the signal path provides a ground reference for the audio signal only without disturbing the antenna signal.

According to an embodiment, the step of generating the differential signal comprises a subtracting of the sensed signal from the ground signal with an operational amplifier. The operational amplifier is connected with its positive input to ground and with its negative input to the sensed signal. The sensed signal may be derived from the signal of the signal path via a high ohmic series resistor and/or inductor connecting the signal path with the negative input of the operational amplifier. By using the operational amplifier and the high ohmic series resistor for generating the differential signal, the signal of the signal path can be sensed without affecting the signal of the signal path due to the high impedance of the input of the operational amplifier. Furthermore, the operational amplifier provides a low-pass filtering of the signal of the signal path due to the frequency dependent transfer function of the operational amplifier. This behaviour can be further enhanced by a feedback capacitor between the negative input of the amplifier and an output of the operational amplifier.

According to an embodiment, the method further comprises a high-pass filtering of the signal of the signal path for providing the antenna signal. The antenna signal may be provided to a radio receiver. The high-pass filtering may be accomplished by connecting the signal path to the radio receiver via a capacitor. As the high-pass filtering, e.g. the capacitor, blocks the differential signal supplied to the signal path, the radio receiver can receive the antenna signal without any disturbance of the differential signal driving the ground reference.

According to an embodiment of the present invention, a control unit for driving a ground reference on a signal path is provided. The signal path is used as a ground reference path for an audio signal and as an input signal path for an antenna signal. The control circuit comprises a signal terminal for receiving a signal of a signal path and a ground terminal for receiving a ground signal. The control circuit is configured to sense the signal of the signal path, to generate a differential signal corresponding to a difference between the sensed signal of the signal path and the ground signal, to low-pass filter the differential signal, and to supply the low-pass filtered differential signal to the signal path. Thus a ground reference for the audio signal is provided by the differential signal on the signal path.

The audio signal may comprise an audio input signal from a microphone and/or an audio output signal to a loudspeaker. According to an embodiment, the audio signal comprises three audio signals, namely one audio input signal from a microphone and two audio output signals to two loudspeakers of a stereo headset.

The control circuit described above provides a ground reference on the signal path for the audio signals without disturbing the antenna signal on the signal path. Therefore, a crosstalk between the audio signals can be reliably reduced or even cancelled.

According to an embodiment, the control circuit comprises a resistor and an inductivity connecting the differential signal to the signal path. Furthermore, the control circuit may comprise a capacitor connecting the differential signal via the resistor and the capacitor to ground. The resistor and the inductivity block the high frequency signals of the differential signal and the capacitor short cuts the high frequency signals of the differential signal to ground. Therefore, a reliable filtering of the high frequency signals is achieved and thus the differential signal supplied to the signal path provides a ground reference for the audio signal without disturbing the high frequency antenna signal.

According to an embodiment, the control circuit comprises an operational amplifier for generating the differnetial signal. The operational amplifier is connected with a positive input of the operational amplifier to the ground signal and with a negative input of the operational amplifier to the sensed signal of the signal path. The sensing of the signal of the signal path may be achieved by connecting the signal path to the negative input of the operational amplifier via a resistor and/or inductor. Due to the high input impedance of the operational amplifier and the resistor, the signal of the signal path is not disturbed when sensing this signal. Therefore, the antenna signal comprised in the signal of the signal path is not affected by the control circuit.

According to an embodiment, the control circuit comprises furthermore a radio frequency output terminal for outputting the antenna signal and a capacitor connecting the signal path and the radio frequency output terminal. The capacitor acts as a high-pass filter and provides the antenna signal of the signal path at the radio frequency output terminal. Furthermore, the capacitor blocks the ground reference of the signal path from being output at the radio frequency output terminal. Therefore, the control circuit is adapted to output the antenna signal separated from the ground reference of the signal path.

According to another embodiment of the present invention, a mobile device is provided. The mobile device comprises a connector for connecting an audio device and a radio frequency antenna to the mobile device. The connector comprises an audio port connected to an audio signal of the mobile device and a common port connected to a signal path used in common as a ground reference path for the audio signal and as an input signal path for an antenna signal of the radio frequency antenna. The mobile device furthermore comprises a control circuit as described above.

The audio signal may comprise an audio input signal from a microphone or an audio output signal to a loudspeaker. The connector of the mobile device may comprise three separate audio ports, namely a first audio port connected to a first audio output signal, a second audio port connected to a second audio output signal, and a third audio port connected to an audio input signal for connecting a microphone to the mobile device. The first audio output signal and the second audio output signal may be adapted to provide audio signals to two separate loudspeakers of a stereo headset connected to the first audio port, the second audio port and the common port. The audio input signal may be an audio input signal of a microphone connected to the mobile device via the third audio port and the common port.

In the mobile device described above, the control circuit drives a ground reference on the signal path such that the antenna signal of the signal path is not influenced and a ground reference for the audio signals of the loudspeakers and the microphone is provided such that a crosstalk between the audio output signals and between any of the audio output signals and the audio input signal is reduced or even cancelled. Thus, a connection of an antenna, a microphone and a stereo headset can be achieved by using a very small and cost-effective multiport connector comprising only four ports, namely the three audio ports and the common port.

According to an embodiment, the control circuit of the mobile device comprises a resistor and an inductivity connecting the differential signal to the signal path. The control circuit can comprise also a capacitor connecting the differntial signal via the resistor and the capacitor to ground. In this manner, a blocking of high frequency signals comprised in the differential signal, e.g. from the antenna signal, are blocked from being supplied to the signal path by the inductivity and short cut to ground by the capacitor. Thus, the differential signal supplied to the signal path does not influence or disturb the antenna signal of the signal path.

According to an embodiment, the control circuit of the mobile device comprises an operational amplifier for generating the differential signal. The operational amplifier is connected with its positive input to the ground signal and with its negative input to the signal sensed at the signal path. Sensing the signal of the signal path may be accomplished by connecting the signal path to the negative input of the operational amplifier via a resistor and/or inductor. By use of the operational amplifier and the resistor, e.g. a high ohmic resistor of 10 KΩ, a disturbance of the signal path due to the sensing of the signal of the signal path is avoided, as the input impedance of the operational amplifier is very high. Therefore, the antenna signal of the signal path is not influenced.

According to an embodiment, a control circuit of the mobile device comprises a radio frequency output terminal for outputting the antenna signal. Furthermore, the control circuit comprises a capacitor connecting the signal terminal and the radio frequency output terminal. The capacitor is acting as a high-pass filter passing the antenna signal from the signal path to the radio frequency output terminal and blocking at the same time the ground reference on the signal path. The mobile device may further comprise a radio frequency receiver connected to the radio frequency output terminal. The radio frequency receiver may be adapted to receive a frequency modulated (FM) radio frequency signal in the very high frequency (VHF) transmission band. In this embodiment the control circuit provides the radio frequency receiver with the antenna signal from the signal path and provides at the same time a ground reference on the signal path for the audio signals for the microphone and the loudspeakers of the stereo headset.

According to an embodiment, the mobile device may be a mobile phone, a personal digitial assistant (PDA) and/or a mobile computer.

### BRIEF DESCRIPTION OF THE DRAWINGS

Hereinafter, exemplary embodiments of the invention will be described with reference to the drawings.
Fig. 1 shows a schematic view of a part of a mobile device according to an embodiment of the invention.
Fig. 2 shows a schematic view of a part of a mobile device according to another embodiment of the invention.

### DETAILED DESCRIPTION OF THE INVENTION

In the following, exemplary embodiments of the present invention will be described in detail. It is to be understood that the following description is given only for the purpose of illustrating the principles of the invention and is not to be taken in a limiting sense. Rather, the scope of the invention is defined only by the appended claims and is not intended to be limited by the exemplary embodiments hereinafter.

It is also to be understood that in the following detailed description of the exemplary embodiments, any direct connection or coupling between functional blocks, devices, components or other physical or functional units shown in the drawings or description herein could also be implemented by an indirect connection or coupling.

It is further to be understood that the features of the various exemplary embodiments described herein may be combined with each other, unless specifically noted otherwise.

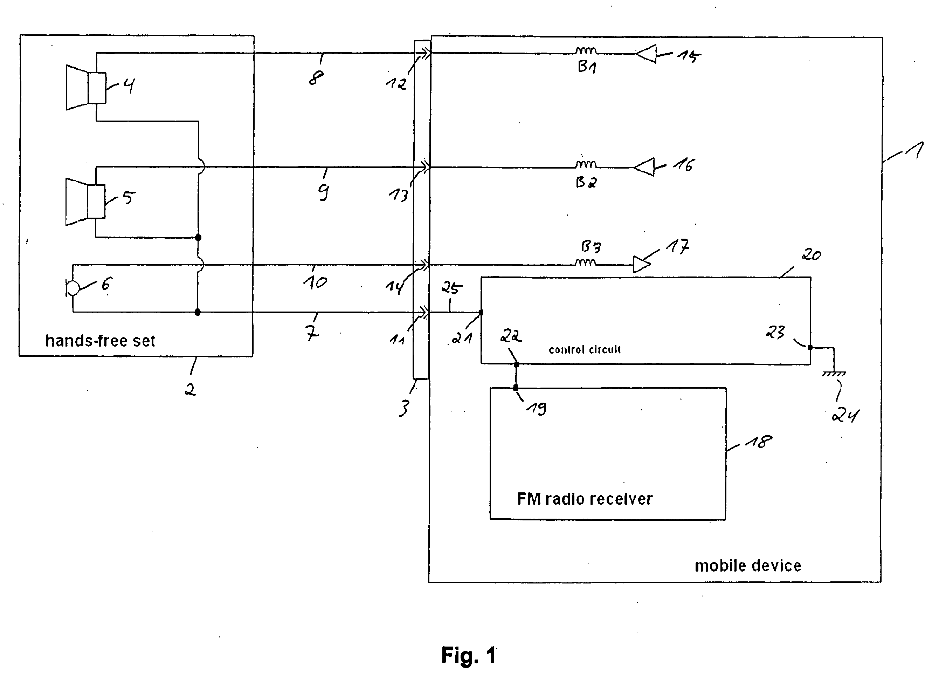

Fig. 1 shows an embodiment of mobile device 1 connected to a portable hands-free set 2 via a multiport connector 3. The portable hands-free set 2 comprises two earspeakers or loudspeakers 4, 5 for reproducing a stereo audio signal to a user of the portable hands-free set 2, a microphone 6 for receiving audio signals, for example speech, and a wiring 7-10 connecting the loudspeakers 4, 5 and the microphone 6 to the multiport connector 3.

The multiport connector 3 comprises for example four ports 11-14 for providing electrical connections from the portable hands-free set 2 to mobile device 1. As illustrated in Fig. 1, port 12 is connected to a first terminal of loudspeaker 4 via the wire 8, port 13 is connected to a first terminal of the loudspeaker 5 via the wire 9, and port 14 is connected to a first terminal of the microphone 6 via the wire 10. A second terminal of the loudspeaker 4, a second terminal of the loudspeaker 5, and a second terminal of the microphone 6 are connected together to the common port 11 via the wire 7. Wire 7 additionally serves as an antenna for receiving for example a frequency modulated (FM) broadcast radio signal in for example a very high frequency (VHF) band.

The mobile device 1 comprises two earspeaker amplifiers 15, 16 adapted to drive the earspeakers or loudspeakers 4, 5 via beads B1, B2 as shown in Fig. 1. The mobile device 1 comprises furthermore a microphone amplifier 17 adapted to receive and amplify a signal from the microphone 6 received via a bead B3. The beads B1-B3 may be ferrite beads and may be used for isolating the FM antenna and to protect the amplifiers 15-17 from a current clamp. The current clamp is a test signal applied to the ports 11-14 of the multiport connector 3 during a type approval test of the mobile device. The current clamp signal introduces an amplitude modulated (AM) disturbance signal on the ports 11-14. The beads provide a very high resistance at high frequencies, for example 1.8 KΩ at 100 MHz, and a low resistance at low frequencies, for example 100 Ω at 10 MHz and 1 Ω at 100 KHz, thus protecting the mobile device 1 from high frequency current clamp signals.

The mobile device 1 furthermore comprises an FM radio receiver 18 having an antenna input 19. Furthermore, the mobile device 1 comprises a control circuit 20 having a signal terminal 21 for receiving a signal of signal path 25 connected to port 11 of the multiport connector, and a ground terminal 23 for receiving a ground signal 24 of the mobile device 1. Furthermore, the control circuit has a radio frequency output terminal 22 connected to the antenna input 19 of the FM radio receiver 18.

As described above, the signal path 25 is used as a ground reference path for the audio signals of the loudspeakers 4, 5 and the microphone 6 and used as an input signal path for an antenna signal. Therefore, control circuit 20 senses the signal of the signal path 25 received via the signal terminal 21 and drives a ground reference on the signal path 25 for the audio signals of the loudspeakers 4, 5 and the microphone 6, and additionally separates the antenna signal from the signal path 25 and provides the separated antenna signal at the radio frequency output terminal 22 to the FM radio receiver 18.

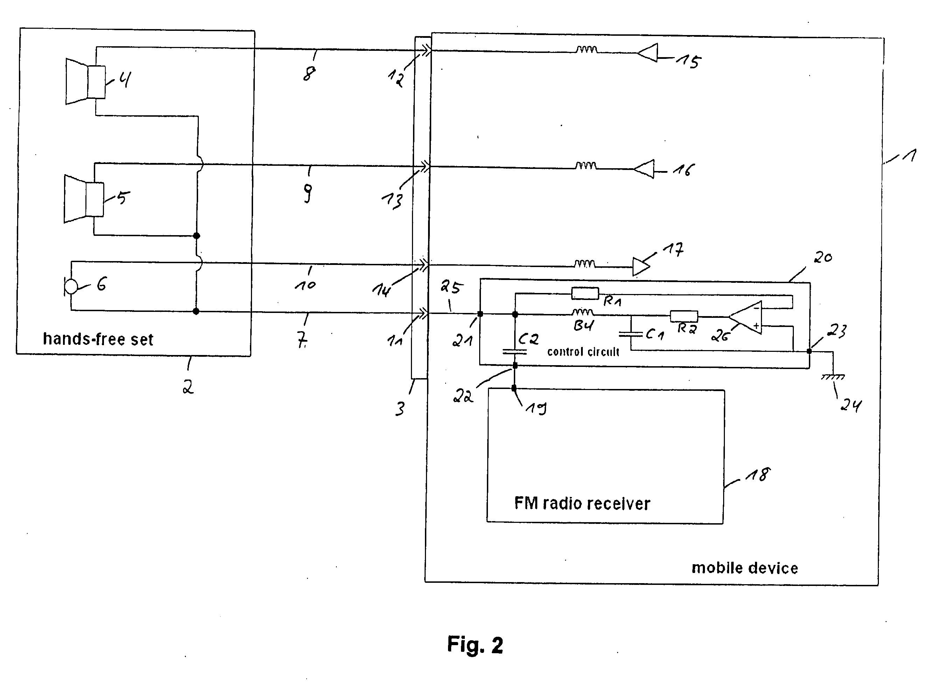

In connection with Fig. 2 the functioning of the control circuit 20 will be described in the following in more detail.

Control circuit 20 comprises a resistor R1 connecting the signal path 25 with a negative input of an operational amplifier 26. A positive input of the operational amplifier 26 is connected to the ground signal 24 of the mobile device 1. An output of the operational amplifier 26 is connected to a first terminal of another resistor R2 and a second terminal of resistor R2 is connected via a capacitor C1 to the ground signal 24 and additionally connected via an inductivity B4 to signal path 25. Finally, the control circuit 20 comprises a second capacitor C2 connecting the signal path 25 with the radio frequency output terminal 22.

The operational amplifier 26 compares the signal of signal path 25 with ground signal 24 and derives a differential signal at the output of the operational amplifier 26. As the operational amplifier 26 has a frequency dependent transfer function, the differential signal at the output of operational amplifier 26 comprises substantially a differential signal corresponding to a difference between the audio signals of the loudspeakers 4, 5 and the microphone 6 and the ground signal 24. However, the differential signal at the output of operational amplifier 26 may also comprise a small signal corresponding to the difference between the antenna signal and the ground signal 24. Therefore, resistor R2, capacitor C1 and inductivity B4 provide a filter that shortcuts those high frequency parts of the differential signal to ground and additionally pass only those parts of the differential signal to the signal path 25 that are needed for driving a ground reference for the audio signals. Consequently, the control circuit 20 provides at the signal terminal 21 a ground reference for the audio signals of the loudspeakers 4, 5 and the microphone 6 without affecting the antenna signal of the signal path 25. The ground reference provided at signal terminal 21 avoids any crosstalk between the audio signals of the loudspeakers 4, 5 and the microphone 6.

Furthermore, the control circuit 20 provides a high-pass filtering function with capacitor C2. Capacitor C2 blocks the differential signal provided from the operational amplifier 26 from the radio frequency output terminal 22 and passes the antenna signal from the signal path 25 to the radio frequency output terminal 22. Therefore, at radio frequency output terminal 22, the antenna signal without any disturbances from the audio signals or the differential signal of the operational amplifier 26 is provided.

The value of the capacitors C1 and C2 may be 1 nF each, the value of the inductivity B4 may be 270 nH, the value of resistor R1 may be 10 kΩ and the value of resistor R2 may be 100 Ω. Thus, the control circuit 20 rejects any echo voltage from the loudspeaker return currents on the signal path 25 superimposed on the microphone input voltage and increases a general separation of the audio signal for the loudspeakers 4, 5 to at least 40 dB without affecting the antenna signal.

## Claims

1. A method for driving a ground reference on a signal path (25), the signal path (25) serving as a ground reference path for an audio signal and as an input signal path for an antenna signal, the method comprising the steps:
- sensing a signal of the signal path (25),
- generating a differential signal corresponding to a difference between the sensed signal of the signal path (25) and a ground signal (24),
- low-pass filtering of the differential signal, and
- supplying the low pass filtered differential signal to the signal path (25) for driving the ground reference of the audio signal.

2. The method according to claim 1, wherein the low pass filtering comprises a supplying of the differential signal to the signal path (25) via a resistor (R2) and an inductivity (B4) and/or a supplying of the differential signal to ground via a resistor (R2) and a capacity (C1).

3. The method according to claim 1 or 2, wherein the step of generating the differential signal comprises subtracting the sensed signal from the ground signal (24) with an operational amplifier (26) connected with a positive input to ground (24) and connected with a negative input to the sensed signal, and wherein the step of sensing the signal of the signal path (25) comprises a connecting of the signal path (25) via a resistor (R1) and/or inductor to the negative input of the operational amplifier (26).

4. The method according to any of claims 1-3, further comprising high pass filtering of the sensed signal for providing the antenna signal.

5. The method according to any of claims 1-4, wherein the audio signal comprises an audio input signal from a microphone (6) or an audio output signal to a loudspeaker (4, 5) or a stereo headset (2).

6. A control circuit for driving a ground reference on a signal path (25), the signal path (25) being used as a ground reference path for an audio signal and as an input signal path for an antenna signal, the control circuit (20) comprising:
- a signal terminal (21) for receiving a signal of the signal path (25), and
- a ground terminal (23) for receiving a ground signal (24),
wherein the control circuit (20) is configured to sense the signal of the signal path (25), to generate a differential signal corresponding to a difference between the sensed signal of the signal path (25) and the ground signal (24), to low-pass filter the differential signal, and to supply the low-pass filtered differential signal to the signal path (25) for driving the ground reference of the audio signal.

7. The control circuit according to claim 6, wherein the control circuit (20) comprises a resistor (R2) and an inductivity (B4) for supplying the differential signal to the signal path (25), and/or a capacitor (C1) for supplying the differential signal via the resistor (R2) and the capacitor (C1) to ground.

8. The control circuit according to claim 6 or claim 7, wherein the control circuit (20) comprises an operational amplifier (26) for generating the differential signal, the operational amplifier (26) being connected with a positive input to the ground signal (24) and with a negative input to the sensed signal.

9. The control circuit according to claim 8, wherein the control circuit (20) comprises a resistor (R1) for sensing the signal of the signal path (25), the resistor (R1) connecting the signal path (25) to the negative input of the operational amplifier (26).

10. The control circuit according to any of claims 6-9, further comprising a radio frequency output terminal (22) for outputting the antenna signal and a capacitor (C2) connecting the signal terminal (21) and the radio frequency output terminal (22) for providing the antenna signal of the signal path (25) at the radio frequency output terminal (22).

11. A mobile device, comprising:
- a connector (3) for connecting an audio device (2) and a radio frequency antenna (7) to the mobile device (1), the connector (3) comprising an audio port (12-14) to receive an audio signal of the mobile device (1) and a common port (11) connected to a signal path (25) used in common as a ground reference path for the audio signal and as an input signal path for an antenna signal of the radio frequency antenna (7), and
- a control circuit (20) according to any one of claims 6-10 for driving a ground reference for the audio signal on the signal path (25).

12. The mobile device according to claim 11, wherein the mobile device (1) further comprises a radio frequency receiver (18) connected to the radio frequency output terminal (22).

13. The mobile device according to claim 11 or 12, wherein the audio port (12-14) comprises a first audio port (12) to receive a first audio output signal for connecting a first loudspeaker (4) to the mobile device (1), a second audio port (13) to receive a second audio output signal for connecting a second loudspeaker (5) to the mobile device (1), and a third audio port (14) to receive an audio input signal for connecting a microphone (6) to the mobile device (1).

14. The mobile device according to any of claims 11-13, wherein the mobile device (1) is a device selected from the group comprising a mobile phone, a personal digital assistant, and a mobile computer.

## Patentansprüche

1. Verfahren zum Steuern einer Massereferenz auf einem Signalpfad (25), wobei der Signalpfad (25) als ein Massereferenzpfad für ein Audiosignal und als ein Eingangssignalpfad für ein Antennensignal dient, wobei das Verfahren die Schritte umfasst:
- Erfassen eines Signals des Signalpfads (25),
- Erzeugen eines Differenzsignals, welches eine Differenz zwischen dem erfassten Signal des Signalpfads (25) und einem Massesignal (24) entspricht,
- Tiefpassfiltern des Differenzsignals, und
- Zuführen des tiefpassgefilterten Differenzsignals zu dem Signalpfad (25) zum Steuern der Massereferenz des Audiosignals.

2. Verfahren nach Anspruch 1, wobei das Tiefpassfiltern ein Zuführen des Differenzsignals zu dem Signalpfad (25) über einen Widerstand (R2) und eine Induktivität (B4) und/oder ein Zuführen des Differenzsignals nach Masse über einen Widerstand (R2) und eine Kapazität (C1) umfasst.

3. Verfahren nach Anspruch 1 oder 2, wobei der Schritt des Erzeugens des Differenzsignals ein Subtrahieren des erfassten Signals von dem Massesignal (24) mit einem Operationsverstärker (26) umfasst, welcher mit einem positiven Eingang mit Masse (24) verbunden ist und mit einem negativen Eingang mit dem erfassten Signal verbunden ist, und wobei der Schritt des Erfassens des Signals des Signalpfads (25) ein Verbinden des Signalpfads (25) über einen Widerstand (R1) und/oder eine Spule mit dem negativen Eingang des Operationsverstärkers (26) umfasst.

4. Verfahren nach einem der Ansprüche 1-3, ferner umfassend ein Hochpassfiltern des erfassten Signals zum Bereitstellen des Antennensignals.

5. Verfahren nach einem der Ansprüche 1-4, wobei das Audiosignal ein Audioeingangssignal von einem Mikrofon (6) oder ein Audioausgangssignal zu einem Lautsprecher (4, 5) oder einem Stereokopfhörer (2) umfasst.

6. Steuerschaltkreis zum Steuern einer Massereferenz auf einem Signalpfad (25), wobei der Signalpfad (25) als ein Massereferenzpfad für ein Audiosignal und als ein Eingangssignalpfad für ein Antennensignal verwendet wird, wobei der Steuerschaltkreis (20) umfasst:
- einen Signalanschluss (21) zum Empfangen eines Signals von dem Signalpfad (25), und
- einen Masseanschluss (23) zum Empfangen eines Massesignals (24),
- wobei der Steuerschaltkreis (20) ausgestaltet ist, das Signal des Signalpfads (25) zu erfassen, ein Differenzsignal zu erzeugen, welches einer Differenz zwischen dem erfassten Signal des Signalpfads (25) und dem Massesignal (24) entspricht, das Differenzsignal mit einem zu tiefpassfiltern, und das tiefpassgefilterte Differenzsignal dem Signalpfad (25) zuzuführen, um die Massereferenz des Audiosignals zu steuern.

7. Steuerschaltkreis nach Anspruch 6, wobei der Steuerschaltkreis (20) einen Widerstand (R2) und eine Induktivität (B4) zum Zuführen des Differenzsignals zu dem Signalpfad (25) und/oder eine Kapazität (C1) zum Zuführen des Differenzsignals über den Widerstand (R2) und die Kapazität (C1) nach Masse umfasst.

8. Steuerschaltkreis nach Anspruch 6 oder 7, wobei der Steuerschaltkreis (20) einen Operationsverstärker (26) zum Erzeugen des Differenzsignals umfasst, wobei der Operationsverstärker (26) mit einem positiven Eingang mit dem Massesignal (24) und mit einem negativen Eingang mit dem erfassten Signal verbunden ist.

9. Steuerschaltkreis nach Anspruch 8, wobei der Steuerschaltkreis (20) einen Widerstand (R1) zum Erfassen des Signals von dem Signalpfad (25) umfasst, wobei der Widerstand (R1) den Signalpfad (25) mit dem negativen Eingang des Operationsverstärkers (26) verbindet.

10. Steuerschaltkreis nach einem der Ansprüche 6-9, ferner umfassend einen Funkfrequenzausgangsanschluss (22) zum Ausgeben des Antennensignals und eine Kapazität (C2), welche den Signalanschluss (21) und den Funkfrequenzausgangsanschluss (22) verbindet, zum Bereitstellen des Antennensignals des Signalpfads (25) an dem Funkfrequenzausgangsanschluss (22).

11. Mobile Vorrichtung, umfassend:
- einen Verbinder (3) zum Verbinden einer Audiovorrichtung (2) und einer Funkfrequenzantenne (7) mit der mobilen Vorrichtung (1), wobei der Verbinder (3) einen Audioanschluss (12-14), um ein Audiosignal der mobilen Vorrichtung (1) zu empfangen, und einen gemeinsamen Anschluss (11) umfasst, welcher mit einem Signalpfad (25) verbunden ist, welcher gemeinsam als ein Massereferenzpfad für das Audiosignal und als ein Eingangssignalpfad für ein Antennensignal der Funkfrequenzantenne (7) verwendet wird, und
- einen Steuerschaltkreis (20) nach einem der Ansprüche 6-10 zum Steuern einer Massereferenz für das Audiosignal auf dem Signalpfad (25).

12. Mobile Vorrichtung nach Anspruch 11, wobei die mobile Vorrichtung (1) ferner einen Funkfrequenzempfänger (18) umfasst, welcher mit dem Funkfrequenzausgangsanschluss (22) verbunden ist.

13. Mobile Vorrichtung nach Anspruch 11 oder 12, wobei der Audioanschluss (12-14) einen ersten Audioanschluss (12), um ein erstes Audiosignal zu empfangen, zum Verbinden eines ersten Lautsprechers (4) mit der mobilen Vorrichtung (1), einen zweiten Audioanschluss (13), um ein zweites Audioausgangssignal zu empfangen, zum Verbinden eines zweiten Lautsprechers (5) mit der mobilen Vorrichtung (1), und einen dritten Audioanschluss (14), um ein Audioeingangssignal zu empfangen, zum Verbinden eines Mikrofons (6) mit der mobilen Vorrichtung (1) umfasst.

14. Mobile Vorrichtung nach einem der Ansprüche 11-13, wobei die mobile Vorrichtung (1) eine Vorrichtung ist, welche aus der Gruppe ausgewählt ist, welche ein Mobilfunktelefon, einen persönlichen digitalen Assistenten und einen mobilen Computer umfasst.

## Revendications

1. Procédé pour piloter une référence de masse sur un trajet de signal (25), le trajet de signal (25) servant de trajet de référence de masse pour un signal audio et de trajet de signal d'entrée pour un signal d'antenne, le procédé comprenant les étapes de :
- détection d'un signal du trajet de signal (25),
- génération d'un signal différentiel correspondant à une différence entre le signal détecté du trajet de signal (25) et un signal de masse (24),
- filtrage passe-bas du signal différentiel, et
- fourniture du signal différentiel ayant fait l'objet du filtrage passe-bas au trajet de signal (25) pour piloter la référence de masse du signal audio.

2. Procédé selon la revendication 1, dans lequel le filtrage passe-bas comprend une fourniture du signal différentiel au trajet de signal (25) par l'intermédiaire d'une résistance (R2) et d'une inductivité (B4) et/ou une fourniture du signal différentiel à la masse par l'intermédiaire d'une résistance (R2) et d'une capacité (C1).

3. Procédé selon la revendication 1 ou 2, dans lequel l'étape de génération du signal différentiel comprend la soustraction du signal détecté du signal de masse (24) avec un amplificateur opérationnel (26) connecté avec une entrée positive à la masse (24) et connecté avec une entrée négative au signal détecté, et dans lequel l'étape de détection du signal du trajet de signal (25) comprend une connexion du trajet de signal (25) par l'intermédiaire d'une résistance (R1) et/ou d'une inductance à l'entrée négative de l'amplificateur opérationnel (26).

4. Procédé selon l'une quelconque des revendications 1 à 3, comprenant en outre le filtrage passe-haut du signal détecté pour fournir le signal d'antenne.

5. Procédé selon l'une quelconque des revendications 1 à 4, dans lequel le signal audio comprend un signal d'entrée audio d'un microphone (6) ou un signal de sortie audio à un haut-parleur (4, 5) ou un casque stéréo (2).

6. Circuit de commande pour piloter une référence de masse sur un trajet de signal (25), le trajet de signal (25) étant utilisé comme trajet de référence de masse pour un signal audio et comme trajet de signal d'entrée pour un signal d'antenne, le circuit de commande (20) comprenant :
- une borne de signal (21) pour recevoir un signal du trajet de signal (25), et
- une borne de masse (23) pour recevoir un signal de masse (24),
dans lequel le circuit de commande (20) est configuré pour détecter le signal du trajet de signal (25), pour générer un signal différentiel correspondant à une différence entre le signal détecté du trajet de signal (25) et le signal de masse (24), pour effectuer un filtrage passe-bas du signal différentiel, et pour fournir le signal différentiel ayant fait l'objet du filtrage passe-bas au trajet de signal (25) pour piloter la référence de masse du signal audio.

7. Circuit de commande selon la revendication 6, dans lequel le circuit de commande (20) comprend une résistance (R2) et une inductivité (B4) pour fournir le signal différentiel au trajet de signal (25), et/ou un condensateur (Cl) pour fournir le signal différentiel par l'intermédiaire de la résistance (R2) et du condensateur (Cl) à la masse.

8. Circuit de commande selon la revendication 6 ou la revendication 7, dans lequel le circuit de commande (20) comprend un amplificateur opérationnel (26) pour générer le signal différentiel, l'amplificateur opérationnel (26) étant connecté avec une entrée positive au signal de masse (24) et avec une entrée négative au signal détecté.

9. Circuit de commande selon la revendication 8, dans lequel le circuit de commande (20) comprend une résistance (R1) pour détecter le signal du trajet de signal (25), la résistance (R1) connectant le trajet de signal (25) à l'entrée négative de l'amplificateur opérationnel (26).

10. Circuit de commande selon l'une quelconque des revendications 6 à 9, comprenant en outre une borne de sortie radiofréquence (22) pour sortir le signal d'antenne et un condensateur (C2) connectant la borne de signal (21) et la borne de sortie radiofréquence (22) pour fournir le signal d'antenne du trajet de signal (25) au niveau de la borne de sortie radiofréquence (22).

11. Dispositif mobile, comprenant :
- un connecteur (3) pour connecter un dispositif audio (2) et une antenne radiofréquence (7) au dispositif mobile (1), le connecteur (3) comprenant un port audio (12-14) pour recevoir un signal audio du dispositif mobile (1) et un port commun (11) connecté à un trajet de signal (25) utilisé en commun comme un trajet de référence de masse pour le signal audio et comme un trajet de signal d'entrée pour un signal d'antenne de l'antenne radiofréquence (7), et
- un circuit de commande (20) selon l'une quelconque des revendications 6 à 10 pour piloter une référence de masse pour le signal audio sur le trajet de signal (25).

12. Dispositif mobile selon la revendication 11, dans lequel le dispositif mobile (1) comprend en outre un récepteur radiofréquence (18) connecté à la borne de sortie radiofréquence (22).

13. Dispositif mobile selon la revendication 11 ou 12, dans lequel le port audio (12-14) comprend un premier port audio (12) pour recevoir un premier signal de sortie audio pour connecter un premier haut-parleur (4) au dispositif mobile (1), un deuxième port audio (13) pour recevoir un deuxième signal de sortie audio pour connecter un deuxième haut-parleur (5) au dispositif mobile (1), et un troisième port audio (14) pour recevoir un signal d'entrée audio pour connecter un microphone (6) au dispositif mobile (1).

14. Dispositif mobile selon l'une quelconque des revendications 11 à 13, dans lequel le dispositif mobile (1) est un dispositif choisi dans le groupe comprenant un téléphone mobile, un assistant numérique personnel, et un ordinateur mobile.
